# EUROPEAN PATENT SPECIFICATION

(11) **EP 0 879 807 B1**
(45) Date of publication and mention of the grant of the patent: **29.10.2003**
(21) Application number: 98201690.9
(22) Date of filing: 20.05.1998
(51) Int. Cl.: C05F 17/02, B65G 65/20

(54) **Composting apparatus**
Kompostiervorrichtung
Appareil de compostage

(30) Priority: 21.05.1997 NL 1006106
(43) Date of publication of application: 25.11.1998
(73) Proprietor: Visno Machinefabriek B.V., 2031 EL Haarlem (NL)
(72) Inventor: Workum, Jan, 1975 DR IJmuiden (NL)
(74) Representative: Smulders, Theodorus A.H.J., Ir.

(56) References cited:
- WO-A-91/19861
- DE-C- 19 510 225
- DE-U- 8 704 843
- GB-A- 185 812
- GB-A- 571 914
- GB-A- 895 287
- NL-C- 1 593
- US-A- 3 020 656

## Description

The present invention relates to a composting apparatus for converting compost material in a hall, provided with a conveying system having an upwardly extending conveyor belt comprising, at or adjacent its bottom end, at least one digging wheel having a wheel body which is open on one side, which digging wheel comprises, along its circumferential side, digging elements which are open in the direction of rotation of the digging wheel, the excavated compost material being laterally moved onto the conveyor belt via an opening on the inside of each of the digging elements and via the open side of the wheel body of the digging wheel, and discharged by the use of this conveyor belt in order to be deposited elsewhere in the hall.

Such composting apparatus is known and serves in particular for composting vegetable, fruit and garden refuse. In this known apparatus, the digging elements are each formed by a container closed on two sides by a plate, which container is open in the direction of rotation of the digging wheel, the excavated compost material being laterally discharged via an opening on the inside of each of the digging elements and via the open side of the wheel body of the digging wheel. The drawback of this known apparatus is that the digging elements of the digging wheel may easily become clogged in that on the one hand the compost material may cling to the inside of the container-shaped digging elements, and on the other the compost material may contain coarse components, such as branch residues, which may become stuck in the digging elements or at least complicate the throwing off of the excavated compost material onto the conveyor belt. As a result, the capacity of the composting apparatus is seriously restricted.

The object of the invention is to rovide a composting apparatus according to claim 1 in which these drawbacks are prevented at least to a high degree.

To this end, in accordance with the invention, the composting apparatus is characterized in that the digging elements are also open on the side facing the conveyor belt.

To provide that the excavation of the compost takes place in an efficient manner, two of such digging wheels are present, arranged on either side of the conveyor belt with the open sides of the wheel bodies facing the conveyor belt.

To be able to cover the entire hall, the conveyor belt, preferably of S-shaped design, with the digging wheels can be movable back and forth through the hall, both in the longitudinal and in the width direction, with the excavation of compost material deposited in the hall taking place in the width direction. The S-shape, i.e. the upwardly directed course with a virtually horizontal portion at the top and at the bottom, of the upwardly extending conveyor belt has the advantage that the compost material to be conveyed can more easily be thrown onto this conveyor belt by the digging wheels, while at the top, it can more easily be taken over by the conveyor belt connecting thereto and extending in the width direction.

In a preferred embodiment, the conveying system comprises a widthwise extending conveyor belt onto which the compost material coming from the upwardly extending conveyor belt is deposited and laterally discharged, which widthwise extending conveyor belt together with the upwardly extending conveyor belt is movable in the longitudinal direction. In particular, the conveying system further comprises a conveyor belt which extends on a lateral side of the hall in the longitudinal direction, for conveying the compost material coming from the widthwise extending conveyor belt in the longitudinal direction to a throw-off bridge, while the longitudinally extending conveyor belt and the throw-off bridge are movable in the longitudinal direction together with the widthwise extending conveyor belt. By virtue of such construction of the conveying system in combination with the digging wheels, a heap of compost material extending over the width of the hall can in each case be displaced in the longitudinal direction in a relatively simple manner.

Because each time when the compost material has thus been displaced over a certain distance in the longitudinal direction of the hall, the heap of compost material has shrunk, it is favorable to arrange that the distance between the widthwise extending conveyor belt and the throw-off bridge is adjustable. In this manner, the available space in the hall can be used in a more efficient manner.

The invention does not merely relate to a composting apparatus, but also to a digging wheel suitable for use in a composting apparatus as described hereinabove. This digging wheel is then characterized in that it comprises a wheel body open on one side and digging elements provided along the circumferential side thereof, which digging elements are open both in the direction of rotation of the digging wheel and, after being mounted in the composting apparatus, on the side facing the upwardly extending conveyor belt of the composting apparatus. To further improve the excavating action of the digging wheel, each of the digging elements is closed on one side by a plate piece which is slightly inwardly inclined, i.e. directed obliquely in the direction of the upwardly extending conveyor belt after mounting in the composting apparatus and viewed in the radial direction of the digging wheel. Further, it proves to be favorable for the excavating action when the circumferential edge of the digging elements is arranged so as to taper in the direction of rotation of the digging wheel.

The composting of vegetable, fruit and garden refuse is an aerobic process. To obtain a sufficient supply of oxygen in the compost material, air is forced into the material through blowing, via an aeration system in the bottom of the hall. To this end, in accordance with the invention, the bottom of the hall comprises perforated aeration pipes,- provided in a gravel bed. For a proper aeration, the open structure of the gravel bed should be maintained. The compost material is deposited onto the gravel bed.

When it for instance occurs that a digging element contacts the floor of the hall or the bottom of the gravel bed provided thereon, it could happen that because of this, or for whatever other reason, a digging element is damaged. In that case, it is desirable to replace the damaged digging element only, on account of the high costs of a digging wheel. Therefore, the invention also relates to a digging element which is suitable for being mounted, in particular through welding, on a digging wheel in a composting apparatus, as described hereinabove. This digging element is then characterized in that it is open on one side, viz. the side which, after attachment to the digging wheel and after mounting of the digging wheel in the composting apparatus, faces the upwardly extending conveyor belt of the composting apparatus. In particular, the digging element is characterized in that after the digging element is mounted on the digging wheel, the circumferential edge of the digging element has its cutting edge tapering in the direction of rotation of the digging wheel, the cutting edge further being deflected in the direction of the axis of the digging wheel, viewed in the lateral direction of the digging element. Particularly through these two latter features, the contact with the gravel bottom is limited such that puddling caused by compost material penetrating (by the rotating digging wheel) into the gravel bed is prevented to a considerable extent. Accordingly, the open structure of the bottom is preserved, which is of benefit to the aeration.

The invention will presently be specified with reference to the accompanying drawings, wherein:
Fig. 1 is a schematic top plan view of a hall containing the composting apparatus according to the invention;
Fig. 2 is a schematic side elevation in the longitudinal direction of this hall;
Fig. 3 is a schematic side elevation in the width direction of this hall;
Fig. 4 shows a digging wheel according to the prior art; while
Fig. 5 shows a digging wheel according to the invention.

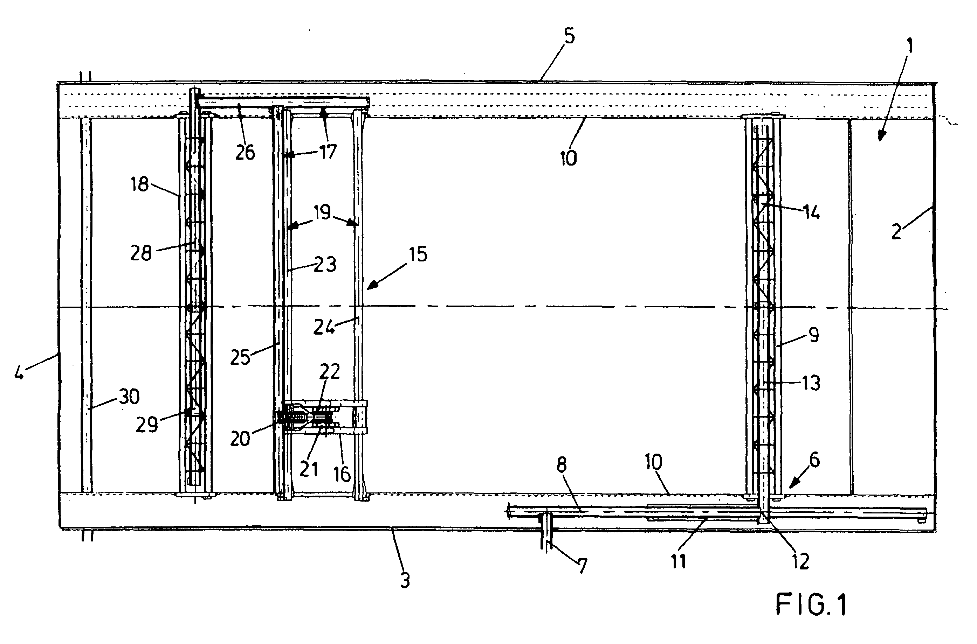

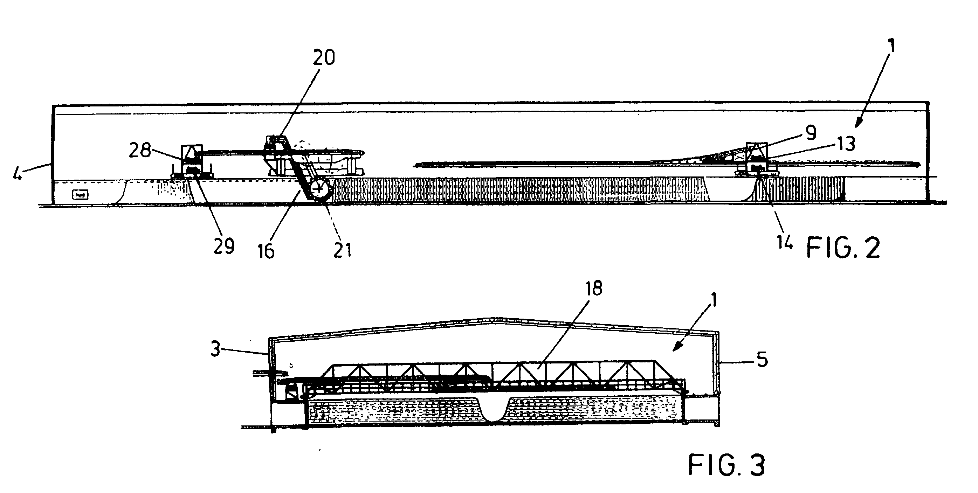

Figs. 1-3 show a hall 1 bounded by walls 2-5. In this hall 1, a filler 6 is present by means of which material to be composed, supplied from outside, is dumped in a compost heap extending in the width direction of the hall 1. For that purpose, the filler is provided with an endless conveyor belt 7 via which the material to be composted is fed into the hall through an opening in the wall 3, an endless conveyor belt 8 arranged in the longitudinal direction of the hall 1, along the wall 3, for displacing the material to be composted along the wall 3 to the rear (to the right in Fig. 1), and a filling bridge 9 onto which the material to be composted is moved to be subsequently dumped, evenly distributed over the width of the hall 1. The filling bridge 9 can be displaced over rails 10 in the longitudinal direction of the hall 1. Because the material to be composted must be passed from the height of the conveyor belt 8 to the filling bridge 9 which is arranged at a much higher position, a tripper carriage 11 is present along the wall 3, which is fixedly connected to the filling bridge 9 and is displaceable together with this filling bridge in the longitudinal direction of the hall 1. The tripper carriage 11 leads the conveyor belt 8 up to the height of the filling bridge 9 and subsequently downwards again in opposite direction, after which the conveyor belt runs further again in the original direction towards the rear (in Fig. 1 further to the right) and is returned in the usual manner via a return roller. The rollers over which the conveyor belt 8 is passed and the drive mechanism of the conveyor belt 8 are not shown in the Figures. As a matter of fact, this also holds for the further conveyor belts in the composting apparatus described herein. During displacement of the filling bridge 9 with the tripper carriage 11, the throw-off point 12 of the conveyor belt 8 is shifted as well. The filling bridge 9 is provided with a first endless conveyor belt 13 which extends over approximately half the width of the hall 1 and onto which the material to be composted is transferred from the conveyor belt 8. Halfway the width of the hall 1, this conveyor belt 13 drops the material to be composted onto a second endless conveyor belt 14 extending therebelow over half the width of the hall 1, which second endless conveyor belt 14 is displaceable over half the width of the hall 1 in the width direction thereof and forms part of the filling bridge.

By moving the throw-off point of the conveyor belt 14 back and forth over the half of the width of the hall, it can be effected that the material to be composted is evenly dumped over half the width of the hall, on the bottom thereof. When the resulting compost heap over this halfwidth is sufficiently high, the direction of rotation of the conveyor belt 14 is reversed and the throw-off point of the conveyor belt is moved back and forth in the width direction over the other half of the width of the hall.

In course of time, when a certain degree of composting has taken place, the material to be composted must be mixed together again. This involves displacement of the heap of compost material extending in the width direction of the hall 1, which is effected by excavating the heap of compost material and depositing the excavated material again elsewhere in the hall. For this, a reversing and displacing machine 15 is used. This machine consists of a excavator 16, a conveying system 17 and a throw-off bridge 18. The reversing and displacing machine 15 extends in the width direction of the hall 1 and can be moved as a whole in the longitudinal direction of the hall 1. To that end, the support frame 19 of the excavator 16 and the throw-off bridge 18 are both displaceable over the rails 10. The excavator 16 is built up of an upwardly extending endless, preferably S-shaped conveyor belt 20, comprising digging wheels 21 and 22 at or adjacent its bottom end. The conveyor belt 20 with the digging wheels 21, 22 is movable back and forth in the width direction of the hall 1 over parts 23 and 24 of the support frame 19, which parts extend in the width direction of the hall 1. The conveying system 17 comprises an endless conveyor belt 25 extending in the width direction of the hall 1, and an endless conveyor belt 26 connecting thereto and extending along the wall 5 in the longitudinal direction of the hall 1. The compost material excavated by means of the digging wheels 21, 22 is laterally thrown onto the upwardly extending conveyor belt 20, conveyed upwards and thrown onto the conveyor belt 25, which discharges the compost material to the lateral side, in the direction of the wall 5, where it is taken over by the conveyor belt 26. This conveyor belt 26 conveys the compost material to the throw-off bridge 18. Like the filling bridge 9, the throw-off bridge 18 is also provided with a first endless conveyor belt 28 which extends over approximately half the width of the hall 1 and onto which the compost material is transferred from the conveyor belt 26. Halfway the width of the hall 1, this conveyor belt 28 throws the compost material onto a second endless conveyor belt 29, which extends therebelow over half the width of the hall 1 and forms part of the throw-off bridge 18. Here too, in the same manner as with the conveyor belt 14, the compost material is dumped so as to be evenly distributed on the bottom, first over one half of the width and then over the other half of the width. Because after the compost material is excavated, conveyed and dumped, the total volume of the heap of compost material has decreased through a progressing degree of composting, the displaced and remixed heap of compost material can, after each displacement, each time be dumped at a slightly smaller distance from the previous one. For this reason, the distance between the conveyor belt 25 and the throw-off bridge 18 is settable.

To obtain a sufficient supply of oxygen to the material to be composted, in particular vegetable, fruit and garden refuse to be composted, the bottom of the hall comprises an aeration system for blowing air into the compost material in a forced manner. Although this is not shown in the Figures, the bottom of the hall 1 comprises perforated aeration pipes arranged in a gravel bed. The compost material is deposited on this gravel bed.

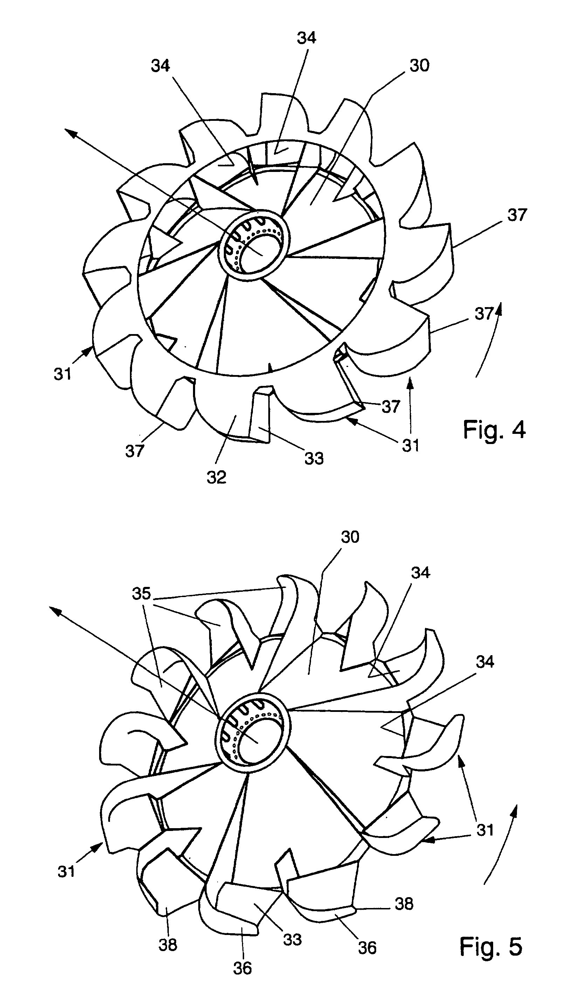

Fig. 4 shows a digging wheel according to the prior art. The digging wheel has a wheel body 30, open at the top side in the Figure, and digging elements 31 provided along the circumferential side. Each of the digging elements 31 is formed by a container which is closed on two sides by plates 32 and 33. The container is open in the direction of rotation indicated by the arrow. Via an opening 34 on the inside of each of the digging elements 31 and via the open side of the wheel body 30, the excavated compost material is laterally discharged on the conveyor belt 20. As is already mentioned hereinabove, the digging elements of this known digging wheel may easily become clogged.

Fig. 5 shows a digging wheel according to the invention. This digging wheel differs from the digging wheel shown in Fig. 4 in that the digging elements are also open on the side facing the conveyor belt 20. In other words, the digging wheel in Fig. 5 mainly differs from the digging wheel shown in Fig. 4 in that the plate 32 shown therein is left out, while further the shape is adjusted to obtain an optimal excavating action. In particular, the plate pieces 35 in the embodiment of Fig. 5 are slightly inwardly inclined, i.e. slightly inclined in the direction of the conveyor belt 20 when viewed in the radial direction of the digging wheel. Further, the circumferential edge 36 of the digging elements 31 tapers slightly in the direction indicated by the arrow.

Each of the digging elements 31 of the digging wheel according to the prior art has a flat and wide cutting edge 37, moving flat across the gravel bottom at each revolution of the wheel. This has a puddling effect; the compost material is to a certain degree pressed into the openings of the gravel bottom, as a consequence of which the open structure of the gravel bed, required for a proper aeration, becomes lost. With the digging elements 31 according to the invention, this drawback is prevented by narrowing the cutting edge 38 of the digging elements 31, or, as already stated hereinabove, by having the circumferential edge 36 of the digging elements 31 taper slightly in the direction indicated by the arrow in Fig. 5. Moreover, by deflecting the cutting edge of the digging elements 31 slightly inwards, hence by having the cutting edge extend not parallel to the axis of rotation of the digging wheel, the part of the digging elements that moves flat across the bottom is further reduced, causing the puddling effect to decrease further.

The composting apparatus operates in the following manner. Via the conveyor belts 7 and 8 and utilizing the tripper carriage 11, the material to be composted is passed to the filling bridge 9, whence it is dumped at the rear of the hall 1 (to the right in Fig. 1) so as to be distributed over the width of the hall. This space constitutes a first composting cell. After a first composting phase, the reversing and displacing machine 15 is moved to the dumped heap of compost material, the compost material is excavated by the excavator 16 while performing a back-and-forth movement in the width direction, and conveyed to the throw-off bridge 18 via the conveyor belts 20, 25 and 26. From there, the compost material is dumped again so as to be distributed over the width of the hall. In this manner, the heap of compost material dumped at the rear of the hall is displaced to a second composting cell. The first composting cell is then free for a new heap of compost material. In this manner, all composting cells are successively filled, while-in each cell, the composting process has further progressed. In the hall, for instance 6-10 of such cells may be present. Through shrinkage of the compost material during the successive composting phases, the distance between the successive cells can become smaller according as the composting process proceeds. From the final cell, the composted material can be discharged from the hall 1 via an endless conveyor belt 30.

The invention is not limited to the exemplary embodiment described hereinabove, but comprises all kinds of modifications thereto, in so far as they fall within the scope of the following claims.

## Claims

1. A composting apparatus for converting compost material in a hall (1), provided with a conveying system (17) having an upwardly extending conveyor belt (20) comprising, at or adjacent its bottom end, at least one digging wheel (21, 22) having
- a wheel body (30) which is open on a side facing the conveyor belt (20),
- digging elements (31) extending from the wheel body along a circumferential side of the wheel body (30), the digging elements (31) having a first opening on a side fixedly facing a direction of rotation of the digging wheel (21, 22), a second opening (34) on a side fixedly facing the wheel body (30), a closed face (33) on a side facing a direction opposite the direction of rotation of the digging wheel (21, 22), and a circumferential face (36) on a side fixedly facing away from the wheel body (30), the excavated compost material being laterally moved from the digging elements (31) onto the conveyor belt (20) via the second opening and via the open side of the wheel body (30), and discharged by the use of said conveyor belt (20) in order to be deposited elsewhere in the hall (1), **characterized in that** the digging elements (31) are also open on the side facing the conveyor belt.

2. A composting apparatus according to claim 1, **characterized in that** two digging wheels (21, 22) are present, arranged on either side of the conveyor belt (20), with the open sides of the wheel bodies (30) facing the conveyor belt.

3. A composting apparatus according to claim 1 or 2, **characterized in that** the conveyor belt (20) is of S-shaped design and is movable with the digging wheels back (21, 22) and forth through the hall (1), both in the longitudinal and in the width direction, the excavation of compost material deposited in the hall (1) taking place in the width direction.

4. A composting apparatus according to claim 3, **characterized in that** the conveying system comprises a widthwise extending conveyor belt (19) onto which the compost material coming from the upwardly extending conveyor belt (20) is deposited and laterally discharged, said widthwise extending conveyor (19) belt together with the upwardly extending conveyor belt (20) being movable in the longitudinal direction.

5. A composting apparatus according to claim 4, **characterized in that** the conveying system comprises a conveyor belt (8) which extends on a lateral side of the hall (1) in the longitudinal direction, for conveying the compost material coming from the widthwise extending conveyor belt (19) in the longitudinal direction to a throw-off bridge (9), the longitudinally extending conveyor belt (8) and the throw-off bridge (9) being movable in the longitudinal direction together with the widthwise extending conveyor belt.

6. A composting apparatus according to claim 5, **characterized in that** the distance between the widthwise extending conveyor belt (19) and the throw-off bridge (9) is adjustable.

7. A composting apparatus according to any one of the preceding claims, **characterized in that** the bottom of the hall (1) comprises perforated aeration pipes, provided in a gravel bed.

8. A digging wheel suitable for use in a composting apparatus according to claim 1, to move material onto a conveyor belt (30) the wheel comprising
- a wheel body (30) which is open on a side facing the conveyor belt after being mounted in the composting apparatus,
- digging elements (31) extending from the wheel body along a circumferential side of the wheel body (30), the digging elements (31) having a first opening on a side fixedly facing direction of rotation of the digging wheel (21, 22), a second opening (34) on a side fixedly facing the wheel body (30), a closed face (33) on a side facing away from the conveyor belt and a circumferential face (36) on a side fixedly facing away from the wheel body (30), the excavated compost material being laterally moved from the digging elements (31) onto the conveyor belt (20) via the second opening and via the open side of the wheel body (30), and discharged by the use of said conveyor belt (20) in order to be deposited elsewhere in the hall (1), **characterized in that** the digging elements (31) are also open on said side facing the conveyor belt.

9. A digging wheel according to claim 8, **characterized in that** each of the digging elements (35) is closed on one side by a plate piece (38) which is slightly inwardly inclined, i.e. directed obliquely in the direction of the upwardly extending conveyor belt (20) after it is mounted in the composting apparatus and viewed in the radial direction of the digging wheel (21, 22).

10. A digging wheel according to claim 8 or 9, **characterized in that** the circumferential edge (36) of the digging elements is arranged so as to taper in the direction of rotation of the digging wheel.

11. A digging wheel according to Claim 8, 9 or 10, wherein the closed face (33) in on the side facing away from the conveyor belt is made of a plate attached to circumferential side of the wheel body (30) and ribs extend from at least some of the digging elements to the axis of the wheel.

12. A digging element suitable for use in wheel for a composting apparatus according to Claim 1, arranged for mounting extending from the wheel body along a circumferential side of a wheel body, the digging elements (31) having a first opening on a side fixedly in a direction of rotation of the digging wheel (21, 22), a second opening (34) on a side fixedly facing the wheel body (30), a closed face (33) on a side facing away from the conveyor belt and a circumferential face (36) on a side fixedly facing away from the wheel body (30), the excavated compost material being laterally moved from the digging elements (31) onto the conveyor belt (20) via the second opening and via the open side of the wheel body (30), and discharged by the use of said conveyor belt (20) in order to be deposited elsewhere in the hall (1), **characterized in that** the digging elements (31) are also open on the side facing the conveyor belt.

13. A digging element according to claim 12, **characterized in that** after the digging element is mounted on the digging wheel, the circumferential edge (36) of the digging element has its cutting edge tapering in the direction of rotation of the digging wheel (21, 22).

14. A digging element according to claim 13, **characterized in that** after the digging element is mounted on the digging wheel, the cutting edge is deflected in the direction of the axis of the digging wheel (21, 22), viewed in the lateral direction of the digging element (35).

## Patentansprüche

1. Kompostiervorrichtung zur Verarbeitung von Kompostmaterial in einer Halle (1), die mit einem Fördersystem (17) versehen ist, das ein sich nach oben erstreckendes Förderband (20) hat, das an oder benachbart zu seinem Bodenende wenigstens ein Abtragungsrad (21, 22) hat, was aufweist
- einen Radkörper (30), der an einer Seite offen ist, die zum Förderband (20) zeigt,
- Abtragungselemente (31), die sich von dem Radkörper entlang einer Umfangsseite des Radkörpers (30) erstrecken, wobei die Abtragungselemente (31) eine erste Öffnung an einer Seite, die starr in eine Drehrichtung des Abtragungsrades (21, 22) zeigt, eine zweite Öffnung (34), die starr in Richtung des Radkörpers (30) zeigt, eine geschlossene Fläche (33) an einer Seite, die in eine Richtung entgegengesetzt zur Drehrichtung des Abtragungsrades (21, 22) zeigt, und eine Umfangsfläche (36) an einer Seite haben, die starr von dem Radkörper (30) weg zeigt, wobei das abgetragene Kompostmaterial von den Abtragungselementen (31) auf dem Förderband (20) via der zweiten Öffnung und via der offenen Seite des Radkörpers (30) seitlich bewegt wird, und durch die Verwendung dieses Förderbandes (20) entladen wird, um anderenorts in der Halle (1) gelagert zu werden, **dadurch gekennzeichnet, dass** die Abtragungselemente (31) ebenfalls an der Seite offen sind, die zum Förderband zeigen.

2. Kompostiervorrichtung nach Anspruch 1, **dadurch gekennzeichnet, dass** zwei Abtragungsräder (21, 22) vorhanden sind, wobei sie an einer Seite des Förderbandes (20) angeordnet sind, wobei die offenen Seiten der Radkörper (30) in Richtung des Förderbandes zeigen.

3. Kompostiervorrichtung nach Anspruch 1 oder 2, **dadurch gekennzeichnet, dass** das Förderband (20) von S-artiger Gestalt ist und mit den Abtragungsrädern (21, 22) durch die Halle (1) zurück und vor beweglich ist, sowohl in der Längs- als auch in der Breitenrichtung, wobei die Abtragung des Kompostmaterials, das in der Halle (1) gelagert ist, in der Breitenrichtung erfolgt.

4. Kompostiervorrichtung nach Anspruch 3, **dadurch gekennzeichnet, dass** das Fördersystem ein sich der Breite nach erstreckendes Förderband (19) aufweist, auf dem das Kompostmaterial, das von dem sich nach oben erstreckenden Förderband (20) kommt, gelagert und seitlich entladen wird, wobei das sich der Breite nach erstreckende Förderband (19) zusammen mit dem sich nach oben erstreckenden Förderband (20) in die Längsrichtung beweglich ist.

5. Kompostiervorrichtung nach Anspruch 4, **dadurch gekennzeichnet, dass** das Fördersystem ein Förderband (8) aufweist, das sich auf einer seitlichen Seite der Halle (1) in die Längsrichtung erstreckt, um das Kompostmaterial, das von dem sich der Breite nach erstreckenden Förderband (19) kommt, in die Längsrichtung zu einer Auswurfbrücke (9) zu fördern, wobei das sich längs erstreckende Förderband (8) und die Auswurfbrücke (9) in die Längsrichtung beweglich sind zusammen mit dem sich der Breite nach erstreckenden Förderband.

6. Kompostiervorrichtung nach Anspruch 5, **dadurch gekennzeichnet, dass** der Abstand zwischen dem sich der Breite nach erstreckenden Förderband (19) und der Auswurfbrücke (9) einstellbar ist.

7. Kompostiervorrichtung nach einem der vorhergehenden Ansprüche, **dadurch gekennzeichnet, dass** der Boden der Halle (1) perforierte Belüftungsrohre aufweist, die in einem Schotterbett vorgesehen sind.

8. Abtragungsrad, das für die Verwendung in einer Kompostiervorrichtung nach Anspruch 1 geeignet ist, um Material auf einem Förderband (30) zu bewegen, wobei das Rad aufweist
- einen Radkörper (30), der an einer Seite offen ist, die zum Förderband zeigt, nachdem er in der Kompostiervorrichtung montiert ist,
- Abtragungselemente (31), die sich von dem Radkörper entlang einer Umfangsseite des Radkörpers (30) erstrecken, wobei die Abtragungselemente (31) eine erste Öffnung an einer Seite, die starr in Drehrichtung des Abtragungsrades (21, 22) zeigt, eine zweite Öffnung (34) an einer Seite, die starr zum Radkörper (30) zeigt, eine geschlossene Fläche (33) an einer Seite, die von dem Förderband weg zeigt, und eine Umfangsfläche (36) an einer Seite haben, die starr von dem Radkörper (30) weg zeigt, wobei das abgetragene Kompostmaterial von den Abtragungselementen (31) auf dem Förderband (30) via der zweiten Öffnung und via der offenen Seite des Radkörpers (30) seitlich bewegt wird, und durch Verwendung des Förderbandes (20) abgelegt wird, um anderenorts in der Halle (1) gelagert zu werden, **dadurch gekennzeichnet, dass** die Abtragungselemente (31) ebenfalls an einer Seite offen sind, die zum Förderband zeigen.

9. Abtragungsrad entsprechend Anspruch 8, **dadurch gekennzeichnet, dass** jedes Abtragungselement (35) an einer Seite durch ein Plattenstück (38) geschlossen ist, das leicht nach innen geneigt ist, d.h. schief ausgerichtet in die Richtung des sich nach oben erstreckenden Förderbandes (20), nachdem es in der Kompostiervorrichtung montiert ist und in die radiale Richtung des Abtragungsrades (21, 22) betrachtet wird.

10. Abtragungsrad entsprechend Anspruch 8 oder 9, **dadurch gekennzeichnet, dass** die Umfangskante (36) der Abtragungselemente angeordnet ist, um sich in die Drehrichtung des Abtragungsrades zu verjüngen.

11. Abtragungsrad entsprechend Anspruch 8, 9 oder 10, wobei die geschlossene Fläche (33) auf der Seite, die von dem Förderband weg zeigt, aus einer Platte, die an einer Umfangsseite der Radkörpers (30) befestigt ist, und aus Rippen gemacht ist, die sich von zumindest einigen der Abtragungselemente zur Radachse erstrecken.

12. Abtragungselement, dass zur Verwendung an einem Rad für eine Kompostiervorrichtung nach Anspruch 1 geeignet ist, dass angeordnet ist, um von dem Radkörper entlang einer Umfangsseite eines Radkörpers sich erstreckend montiert zu werden, wobei die Abtragungselemente (31) eine erste Öffnung an einer Seite starr in Drehrichtung des Abtragungsrades (21, 22), eine zweite Öffnung (34) an einer Seite, die starr in Richtung des Radkörpers (30) zeigt, eine geschlossene Fläche (33) an einer Seite, die von dem Förderband weg zeigt, und eine Umfangsfläche (36) haben, die starr von dem Radkörper (30) weg zeigt, wobei das abgegragende Kompostmaterial von den Abtragungselementen (31) auf dem Förderband (20) via der zweiten Öffnung und via der offenen Seite des Radkörpers (30) seitlich bewegt wird, und durch Verwendung des Förderbandes (20) abgeladen wird, um anderenorts in der Halle (1) gelagert zu werden, **dadurch gekennzeichnet, dass** die Abtragungselemente (31) ebenfalls an einer Seite offen sind, die zum Förderband zeigt.

13. Abtragungselement nach Anspruch 12, **dadurch gekennzeichnet, dass**, nachdem das Abtragungselement an dem Abtragungsrad montiert ist, die Umfangskante (36) des Abtragungselements ihre Schneidekante in Drehrichtung des Abtragungsrades (21, 22) verjüngt.

14. Abtragungselement nach Anspruch 13, **dadurch gekennzeichnet, dass**, nachdem das Abtragungselement an dem Abtragungsrad montiert ist, die Schneidekante bei Betrachtung von der seitlichen Richtung des Abtragungselements (35) in die Richtung der Achse des Abtragungsrades (21, 22) ausgelenkt ist.

## Revendications

1. Appareil de compostage destiné à transformer un matériau composté dans une salle (1), possédant un système de transport (17) ayant une courroie transporteuse (20) gui s'étend vers le haut et comporte, à son extrémité inférieure ou près de celle-ci, au moins une roue de creusement (21, 22) ayant
un corps (30) de roue qui débouche d'un côté tourné vers la courroie transporteuse (20),
des éléments de creusement (31) qui s'étendent depuis le corps de roue le long d'un côté circonférentiel du corps de roue (30), les éléments de creusement (31) ayant une première ouverture d'un côté tourné en permanence dans le sens de rotation de la roue de creusement (21, 22), une seconde ouverture (34) d'un côté tourné en permanence vers le corps de roue (30), une face fermée (33) d'un côté tourné en direction opposée à la direction de rotation de la roue de creusement (21, 22), et une face circonférentielle (36) d'un côté tourné en permanence du côté opposé au corps de roue (30), le matériau composté subissant l'excavation étant déplacé latéralement des éléments de creusement (31) à la courroie transporteuse (20) par l'intermédiaire de la seconde ouverture et du côté ouvert du corps de roue (30), et étant évacué à l'aide de la courroie transporteuse (20) pour être déposé ailleurs dans la salle (1), **caractérisé en ce que** les éléments de creusement (31) sont aussi ouverts du côté tourné vers la courroie transporteuse.

2. Appareil de compostage selon la revendication 1, **caractérisé en ce que** deux roues de créusement (21, 22) sont présentes et sont placées de part et d'autre de la courroie transporteuse (20), les côtés ouverts des corps de roue (30) étant tournés vers la courroie transporteuse.

3. Appareil de compostage selon la revendication 1 ou 2, **caractérisé en ce que** la courroie transporteuse (20) a une réalisation en S et est mobile alternativement avec les roues de creusement (21, 22) dans la salle (1) à la fois en directions longitudinale et de la largeur, l'excavation du matériau composté déposé dans la salle (1) étant réalisée dans la direction de la largeur.

4. Appareil de compostage selon la revendication 3, **caractérisé en ce que** le système de transport comprend une courroie transporteuse (19) qui s'étend dans la direction de la largeur et sur laquelle le matériau composté provenant de la courroie transporteuse (20) qui s'étend vers le haut est déposé et évacué latéralement, la courroie transporteuse (19) qui s'étend suivant la largeur en coopération avec la courroie transporteuse (20) qui s'étend vers le haut étant mobile dans la direction longitudinale.

5. Appareil de compostage selon la revendication 4, **caractérisé en ce que** le système de transport comporte une courroie transporteuse (8) qui s'étend d'un côté latéral de la salle (1) dans la direction longitudinale pour le transport du matériau composté provenant de la courroie transporteuse (19) qui s'étend suivant la largeur dans la direction longitudinale d'un pont (9) de lancement, la courroie transporteuse (8) qui s'étend longitudinalement et le pont de lancement (9) étant mobiles dans la direction longitudinale avec la courroie transporteuse qui s'étend suivant la largeur.

6. Appareil de compostage selon la revendication 5, **caractérisé en ce que** la distance comprise entre la courroie transporteuse (19) qui s'étend suivant la largeur et le pont de lancement (9) est réglable.

7. Appareil de compostage selon l'une quelconque des revendications précédentes, **caractérisé en ce que** la partie inférieure de la salle (1) comporte des tubes perforés d'aération disposés dans un lit de graviers,

8. Roue de creusement destinée à être utilisée dans un appareil de compostage selon la revendication 1, pour déplacer un matériau sur une courroie transporteuse (30), la roue comprenant
un corps de roue (30) qui est ouvert d'un côté tourné vers la courroie transporteuse après son montage dans l'appareil de compostage,
des éléments de creusement (31) qui s'étendent depuis le corps de roue du côté circonférentiel du corps de roue (30), les éléments de creusement (31) ayant une première ouverture d'un côté tourné en permanence dans la direction de rotation de la roue de creusement (21, 22), une seconde ouverture (34) d'un côté tourné en permanence vers le corps de roue (30), une face fermée (33) d'un côté tourné du côté opposé à la courroie transporteuse, et une face circonférentielle (36) d'un côté tourné en permanence du côté opposé au corps de roue (30), le matériau composté retiré par excavation étant déplacé latéralement des éléments de creusement (31) à la courroie transporteuse (20) par l'intermédiaire de la seconde ouverture et du côté ouvert du corps de roue (30) et évacué à l'aide de la courroie transporteuse (20) afin d'être déposé ailleurs dans la salle (1), **caractérisé en ce que** les éléments de creusement (31) sont aussi ouverts du côté tourné vers la courroie transporteuse.

9. Roue de creusement selon la revendication 8, **caractérisée en ce que** chacun des éléments de creusement (35) est fermé d'un côté par une pièce (38) en forme de plaque qui est légèrement inclinée vers l'intérieur, c'est-à-dire dirigée obliquement dans la direction de la courroie transporteuse (20) qui s'étend vers le haut, après son montage dans l'appareil de compostage et vu dans la direction radiale de la roue de creusement (21, 22).

10. Roue de creusement selon la revendication 8 ou 9, **caractérisée en ce que** le bord circonférentiel (36) des éléments de creusement est disposé afin qu'il soit incliné dans la direction de rotation de la roue de creusement.

11. Roue de creusement selon la revendication 8, 9 ou 10, dans laquelle la face fermée (33) qui se trouve du côté opposé à la courroie transporteuse est formée d'une plaque fixée au côté circonférentiel du corps de roue (30), et des nervures s'étendent à partir de certains au moins des éléments de creusement vers l'axe de la roue.

12. Elément de creusement destiné à être utilisé dans une roue d'appareil de compostage selon la revendication 1, disposé afin qu'il soit monté en s'étendant depuis un corps de roue le long d'un côté circonférentiel du corps de roue, les éléments de creusement (31) ayant une première ouverture d'un côté tourné en permanence dans la direction de rotation de la roue de creusement (21, 22), une seconde ouverture (34) d'un côté tourné de façon permanente vers le corps de roue (30), une face fermée (33) d'un côté tourné du côté opposé à la courroie transporteuse, et une face circonférentielle (36) d'un côté tourné en permanence du côté opposé au corps de roue (30), le matériau composté retiré par excavation étant déplacé latéralement depuis les éléments de creusement (31) sur la courroie transporteuse (20) par l'intermédiaire de la seconde ouverture et du côté ouvert du corps de roue (30), et étant évacué à l'aide de la courroie transporteuse (20) pour être déposé ailleurs dans la salle (1), **caractérisé en ce que** les éléments de creusement (31) sont aussi ouverts du côté tourné vers la courroie transporteuse.

13. Elément de creusement selon la revendication 12, **caractérisé en ce que**, après le montage de l'élément de creusement sur la roue de creusement, le bord circonférentiel (36) de l'élément de creusement a un bord de coupe incliné dans la direction de rotation de la roue de creusement (21, 22).

14. Elément de creusement selon la revendication 13, **caractérisé en ce que**, après le montage de l'élément de creusement sur la roue de creusement, le bord de coupe est dévié dans la direction de l'axe de la roue de creusement (21, 22), vu dans la direction latérale de l'élément de creusement (35).
